# DEMANDE DE BREVET EUROPEEN

(11) **EP 0 622 587 A2**
(43) Date de publication de la demande: **02.11.1994**
(21) Numéro de dépôt: 93107114.6
(22) Date de dépôt: 03.05.1993
(51) Int. Cl.: F23D 14/16, F23D 14/20, F23C 3/00

(54) **Procédé de combustion pour brûler des gaz et chambre de combustion pour réaliser le procédé**

(30) Priorité: 30.04.1992 CH 1385/92
(71) Demandeur: PORETTI-GAGGINI SA, CH-6930 Bedano (CH)
(72) Inventeur: Jaccard, Léon, Ing., CH-6985 Curio (CH)
(74) Mandataire: Gaggini, Carlo, Dipl.Ing.

(57) **Abrégé**

L'invention concerne un procédé de combustion et une chambre de combustion dans laquelle la combustion du combustible gazeux a lieu sur la surface de combustion d'un corps poreux (1;17;18) grâce à la mise en contact, sur la dite surface, du combustible gazeux avec l'air comburant.

L'invention est caractérisée par le fait qu'avant d'entrer en contact avec le combustible gazeux l'air comburant traverse le corps poreux (1;17;18).

L'avantage de l'invention consiste dans la possibilité de brûler des gaz chargés de cendres et de poussières sans risque d'obturation des pores très fins du corps poreux (1;17;18), tout en profitant des avantages connus de la combustion sur un corps poreux, à savoir la réduction des oxydes d'azote et de monoxyde de carbone contenus dans les gaz de combustion. (fumées)

## Description

La présente invention concerne un procédé de combustion pour brûler des gaz sur une surface de combustion constituée d'un corps poreux perméable aux gaz, dans lequel la combustion se forme au niveau des propres pores de la superficie du corps poreux, grâce à la mise en présence du combustible gazeux et de l'air comburant porteur de l'oxygène nécessaire au procéssus de la combustion. L'invention concerne précisément une chambre de combustion pour la réalisation du procédé selon l'invention.

Les procéssus de combustion et les chambres de combustion sont normalement utilisés dans le but d'obtenir la combustion des combustibles gazeux, soit des gaz naturels comme le méthane soit des gaz provenant de la gazéïfication de l'huile commune de chauffage, mazout, ou du bois de chauffage.

Dans les chambres de combustion traditionelles, comme par exemple dans les brûleurs à mazout, la combustion est obtenue par pulvérisation du combustible liquide et adjonction d'air comburant, c'est à dire d'oxygène, au point de pulvérisation.

Ceci conduit à la formation d'une flamme de dimensions considérables telles que, dans les chaudières de chauffage, cette flamme vient lécher las parois intérieures de la chaudière et des carnaux où circule l'eau de l'échangeur de chaleur. Ce type de brûleur avec formation d'une flamme de grand volume a l'inconvénient de provoquer la formation excessive d'émissions nocives, en particulier en ce qui concerne le monoxyde de carbone et les oxydes d'azote.

Pour ramédier à cet inconvénient, la Société ALZETA CORPORATION de Santa Clara en Californie (USA) a développé un nouveau type de brûleur en fibre céramique, commercialisé sous la dénomination "Pyrocore". Le brûleur "Pyrocore" est constitué d'un support en treilli métallique recouvert d'une couche de fibres d'oxydes céramiques. Le corps de ce brûleur est constitué d'une sorte de "chaussette" fermée, à l'intérieur de laquelle est conduit le combustible gazeux mélangé à l'air primaire de combustion. La "chaussette" se trouve dans une ambiance normale d'air. Le combustible gazeux, aprés avoir traversé la paroi de la "chaussette" constituée du support métallique et des fibres d'oxydes céramiques, arrive à la surface extérieure et s'allume, donnant lieu à la combustion. Celle ci se produit sur une couche superficielle de la "chaussette" sans flamme visible. En effet, toute la surface du corps de la "chaussette", qui peut certainement être assimilé à un corps poreux, devient incandescent par formation d'une série très dense de petits foyers localisés, d'autant plus rapprochés las uns des autres que la densité des pores à travers lesquels passe le mélange de gaz à brûler est grande. A la limite, toutes las surfaces de la "chaussette" constituent un corps unique de combustion sans production de flamme. Les avantages de ce système de combustion bien connu sont les suivants: taux d'émission réduits de gaz polluants, surtout en ce qui concerne les oxydes d'azote qui ne dépassent pas 15 ppm (abréviation de "parts per million", couramment employée dans la pratique courante d'analyse des émissions gazeuses), transmission thermique par radiation très élevée et uniforme, une combustion complète, absence absolue d'émission phonique du système et d'autres encore.

Tous ces avantages, desquels la réduction des émissions des gaz polluants est le plus important, sont la conséquence des conditions particulières de combustion privée pratiquement de flamme visible: en effet les mécanismes qui favorisent la formation des oxydes d'azote sont liés aux fortes concentrations, en un seul endroit, du mélange de l'oxyde de carbone et de l'air comburant, c'est à dire à la formation d'une flamme vive qui produit un suréchauffement du mélange d'azote et d'oxygène, ce qui provoque la formation des oxydes d'azote. Sans entrer plus avant dans les procéssus de combustion décrits précédemment il suffira de retenir que la combustion d'une quantité déterminée de combustible gazeux, répartie sur une surface étendue avec formation d'un grand nombre de micro-foyers et pratiquement en l'absence de flamme visible, au lieu de leur concentration en un seul endroit, permet de réduire substantiellement la teneur des émissions nocives des gaz de combustion, en particulier le monoxyde de carbone résiduel et les oxydes d'azote.

Le dispositif de combustion décrit précédemment présente cependant un inconvénient majeur, c'est à dire que, par le fait que le combustible gazeux doit traverser toute l'épaisseur du corps poreux, son emploi sera limité seulement là où le gaz ne contiendra aucune particule solide, des cendres par exemple. En effet, la présence de telles particules provoquera l'encrassement plus ou moins rapide des pores du corps poreux et par suite sa mise hors service, car il est évident que si le gaz n'arrive plus à passer à travers le corps poreux, le procéssus de combustion s'éteint automatiquement. Cet inconvénient revêt une importance encore plus grande quand le système de combustion "Pyrocore" décrit est appliqué à la combustion de gaz produits par un gazogène pour la gazéïfication du bois, qu'il s'agisse de bois frais et à plus forte raison quand il s'agit de bois pollué à gazéïfier provenant de bois de démolition ou de la fabrication de meubles. Dans ce cas la présence de cendres extrèmement fines contenues dans le gaz produit par le gazogène provoquerait l'encrassement presque immédiat des pores du corps poreux.

Le but de la présente invention est donc celui d'éliminer les inconvénients du système de combustion connu sous la dénomination "Pyrocore" et de proposer un procédé de combustion et une chambre de combustion qui, tout an permettant d'obtenir les bons résultats du système "Pyrocore", puisse être utilisés aussi avec un gazogène pour la gazéïfication de bois, même contaminé, c'est à dire pour la combustion de gaz chargés de particules solides.

Ce but est atteint dans un procédé de combustion ayant les caractéristiques de la revendication 1 et avec une chambre de combustion pour réaliser le procédé inventif ayant les caractéristiques de la revendication 4.

Grâce aux caractéristiques de la revendication 1, on évite tout risque d'encrassement des pores du corps poreux, car, au lieu de faire passer le combustible gazeux chargé de poussières à travers le corps poreux, on prévoit seulement le passage de l'air comburant à travers le corps poreux, de sorte que, cet air ne contenant pas de particules solides, parce que facilement filtrable avant de l'envoyer vers le corps poreux, nous n'avons à craindre aucune possibilité d'encrassement des pores de ce corps. La combustion a lieu sur la superficie "externe" du corps poreux de la manière essentiellement connue, avec la formation de petits foyers localisés et donc sans flamme visible, de façon à ce que soient réalisées toutes les conditions de combustion optimales mentionnées dans la technique reconnue.

Les revendications 2 et 3 concernent par contre des perfectionnements ultérieurs du procédé inventif: la revendication 2 grâce au fait que des dispositifs prévoient de mélanger plus intimement le combustible gazeux avec l'air comburant, tandis que la revendication 3 propose d'augmenter la superficie de combustion en prévoyant un canal de passage du combustible gazeux délimité des deux côtés par une surface de corps poreux sur laquelle se produit la combustion.

La revendication 4 concerne la forme plus simple de réalisation d'une chambre de combustion pour réaliser le procédé inventif, tandis que la revendication 5 se référe à une forme de réalisation d'un corps poreux de simplicité maximale, puisque le corps poreux est un cylindre. Cette solution présente l avantage essentiel d être peu coûteuse.

La solution de la revendication 6 est une variante des revendications 4 et 5, et est caractérisée par le fait que le combustible gazeur passe à l'intérieur du corps poreux cylindrique tandis que l'air comburant traverse le corps poreux de l'extérieur vers l'intérieur. Cette solution présente l'avantage, par rapport aux revendications 4 et 5, de faciliter le nettoyage périodique de la sufarce du corps poreux, puisque la surface "filtrante" se trouve à l'extérieur du cylindre et est donc plus facilement accessible.

La variante préférée de la revendication 7 montre une possibilité d'augmenter l'efficacité du procéssus de combustion. A telle fin la chambre d'alimentation du combustible gazeux est séparée par des parois transversales, dont la but est de créer des turbulences du mélange combustible gazeux / air comburant dans le voisinage des surfaces de combustion du corps poreux. Un bon mélange des composants favorise la régularité de la combustion, évitant la formation de zones privilégiées - à apport important d'oxygène - et de zones défavorisées - à faible apport d'oxygène - et par la même la combustion complète.

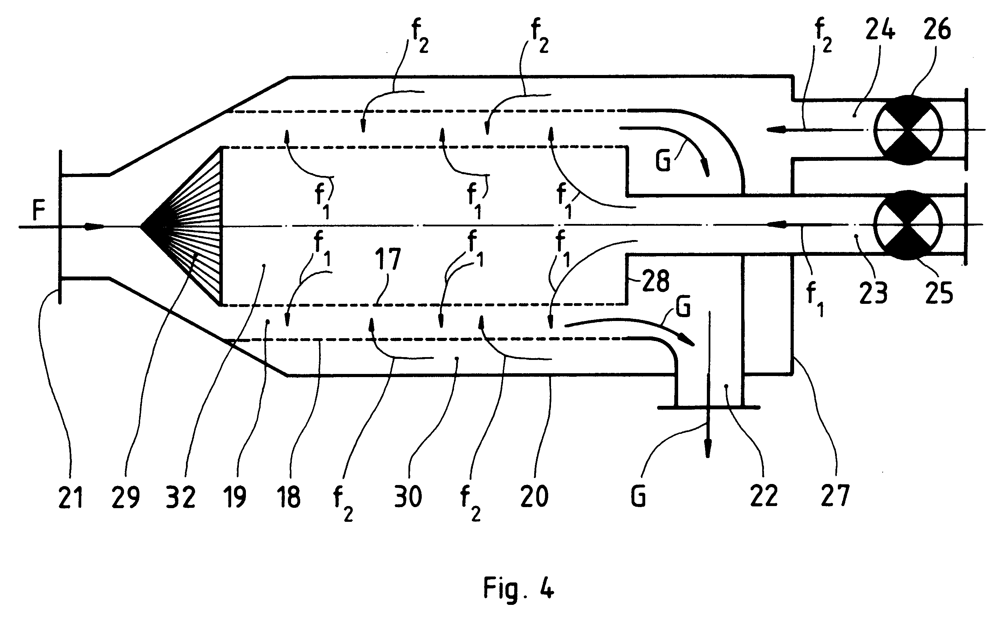

La variante préférée de réalisation de la revendication 8, selon laquelle sont prévus deux corps poreux coaxiaux formant entre eux un canal creux annulaire parcouru par le combustible gazeux, présente l'avantage, par rapport aux exécutions précédentes, de contraindre le combustible gazeux à entrer en contact de toutes parts avec la surface de combustion du corps poreux, respectivement des deux corps poreux. Alors que dans les formes d'exécution - plus simples - des Figures de 1 à 3 le combustible gazeux avait encore la possibilité d'entrer en contact, dans la zone de combustion, avec une paroi "froide", laquelle n'étant pas alimentée en oxygène, de sorte que sur cette paroi la combustion n'était pas possible, dans la forme d'exécution de la Figure 4, correspondant à la revendication 8, le combustible gazeux est conduit à travers un canal délimité de tous côtés par une superficie enflammée, de sorte que la combustion complète est assurée, même si, grâce à la caractéristique de base de l'invention, il n'y a pas formation d'une flamme proprement dite.

La forme de réalisation préférée de la chambre de combustion de la revendication 9 est un perfectionnement ultérieur de celle de la revendication 8, et consiste essentiellement de la prise en compte de la vitesse d'écoulement du combustible gazeux, de l'air comburant et des gaz de combustion chauds qui se sont formés à l'intérieur de la chambre de combustion. Selon cette forme de réalisation préférée les sections de passage des enveloppes spécifiques sont adaptées au volume du gaz qui les traverse, de manière à éviter des accélérations indésirées du gaz.

La revendication 10 concerne une forme de réalisation préférée de l'invention. Par cette mesure, qui prévoit l'emploi de clapets de réglage de modulation des débits d'air de combustion, il est possible d'équilibrer d'une façon optimale la quantité d'air apportée aux surfaces des corps poreux et créer ainsi des conditions aérodynamiques parfaitement équilibrées. Cette disposition tend également à optimaliser les conditions de combustion dans la chambre de combustion.

La variante préférée correspondant à la revendication 11, selon laquelle le corps poreux présente une densité décroissante des trous d'une extrémité à l'autre, correspond précisément à l'exigence qui cherche à varier, en l'optimisant, le flux d'air comburant traversant le corps poreux.

La revendication 12 se réfère aux caractéristiques spécifiques du matériau constituant le corps poreux, lequel doit être en mesure de supporter sans être endommagé les hautes températures de combustion.

Enfin la variante préférée de la revendication 13 constitue une amélioration ultérieure de la chambre de combustion présentant deux corps poreux coaxiaux, selon la proposition des revendications 8 ou 9: l'avantage de cette variante réside dans la possibilité de créer une ondulation du courant du gaz de combustion, avec comme conséquence la formation de turbulences, dans le canal annulaire de passage entre les deux corps poreux, ce qui, de manière analogue à ce qui se passe lors de l'application de la caractéristique de la revendication 7, dans le cas de la chambre à un seul corps poreux, améliore la qualité du procéssus de combustion.

L'invention sera maintenant décrite d'une manière plus détaillée avec l'aide des exemples de réalisation sus mentionnés accompagnés des Figures correspondantes.
- Fig.1: Une section schématique longitudinale d'une chambre de combustion à un corps poreux.
- Fig.1a: Un détail agrandi de la section du corps poreux.
- Fig.2: Une variante d'une chambre de combustion comme celle de la Fig.1 également en section schématique longitudinale.
- Fig.3: Une autre variante d'une chambre de combustion du même type que celui des Figures 1 et 2, également dans la même représentation, avec un perfectionnement pour améliorer la qualité de la combustion.
- Fig.3a: Un détail de la superficie du corps poreux, représenté schématiquement.
- Fig.4: Une variante d'une chambre de combustion en section schématique longitudinale présentant deux corps poreux coaxiaux.
- Fig.5: Une variante de la chambre de combustion de la Fig. 4 dans la même représentation schématique.
- Fig.6: Une section longitudinale le long d'une partie de la chambre de combustion de la Fig.5, qui montre d'une manière plus précise la conformation des corps poreux le long du canal annulaire de passage.

Dans les descriptions des Figures on a volontairement schématisé la représentation pour en faciliter la lecture. Pour le même motif l'isolation thermique à l'extérieur de la chambre de combustion n'a pas été représentée, celle ci étant naturellement prévue dans le but d'éviter les pertes inutiles de chaleur.

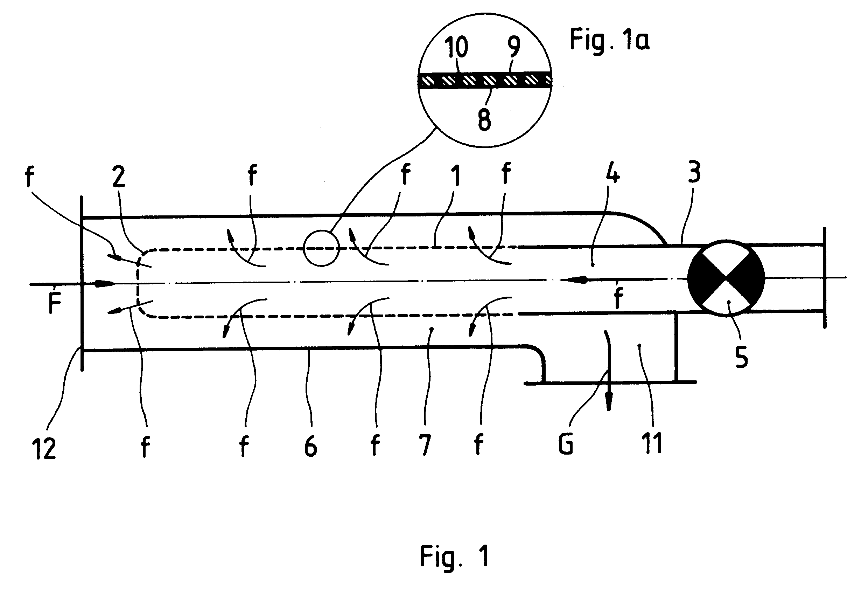

Dans la Fig.1 on voit donc un corps poreux 1 ayant la forme d'un cylindre - représenté par des traits simples - fermé à une extrémité par une partie frontale ou calotte 2 et relié à l'autre extrémité, non représentée, avec un embout 3 qui forme, en son intérieur, une chambre d'alimentation d'air comburant 4. La chambre d'alimentation d'air comburant 4 va donc, dans cette forme d'exécution, depuis un clapet de réglage jusqu'au début du corps poreux 1.

On entend par corps poreux, ici comme dans toute la description, un corps solide constitué d'une couche de matériel d'épaisseur bien définie et perméable aux gaz, de manière telle qu'un gaz, en particulier l'air, capable de vaincre une résistance déterminée, puisse traverser la dite couche d'une paroi à l'autre. Le corps poreux 1 est contenu dans une enveloppe 6 de forme essentiellement cylindrique. L'espace entre le corps poreux 1 et l'enveloppe 6 a donc une forme annulaire, tout au moins en regard de la partie cylindrique du corps poreux 1. Dans sa zone qui précède la partie frontale 2, à gauche dans la Figure 1, l'espace est naturellement cylindrique à volume complet. Cet espace est appelé chambre d'alimentation du combustible gazeux.

La Fig 1a montre, d'une manière purement schématique, un détail du corps poreux 1. Dans la Figure celui ci est représenté comme une couche avec une surface d'entrée de l'air 8 et une surface de sortie de l'air 9 présentant des trous de passage 10. Cette représentation et cependant purement symbolique. En fait le corps poreux 1 est constitué d'un matériau présentant des canaux de passage très fins ayant un tracé non rectiligne, comme par exemple une éponge. Sa caractéristique principale est justement de provoquer une dispersion intime de l'air, qui le traverse de la surface d'entrée 8 à celle de sortie 9 sur laquelle a lieu la combustion. La surface de sortie 9 du corps de combustion est donc toujours, dans cette description, la surface du corps poreux 1 sur laquelle se produit la combustion du combustible gazeux, de sorte qu'elle sera toujours désignée comme "surface de combustion" du corps poreux 1. Etant donnée cette définition il est évident que la surface de combustion 9 du corps poreux 1 peut se trouver, suivant la construction de la chambre de combustion, aussi bien à l'extérieur qu'à l'intérieur d'un corps poreux creux 1. Ce qui compte dans la présente invention est uniquement la direction dans laquelle le corps poreux est traversé par l'air comburant. En ce qui concerne la composition même du corps poreux 1, c'est à dire le matériau qui constitue le dit corps poreux, nous tenons à souligner dès à présent que cet aspect n'est pas essentiel pour le but visé par l'invention. Selon une forme préférée de l'invention on choisit un matériau résistant à haute température, comme par exemple les fibres de carbone ou les fibres céramiques. Si nécessaire les fibres en question peuvent être renforcées par une structure support adéquate qui donne au corps poreux 1 la stabilité mécanique nécessaire.

Dans la Fig. 1 les flèches représentent les courants aéroformes suivants:
Les flèches f indiquent le courant de l'air comburant. Comme on peut le voir, l'air comburant, après avoir passé, convenablement dosé par le clapet de réglage 5, traverse le corps poreux 1, aussi bien dans sa partie cylindrique que dans sa partie frontale 2, et arrive dans la chambre d'alimentation du combustible gazeux 7. Dans son déplacement de passage, le dit air comburant entre en contact avec le combustible gazeux, arrivant dans la chambre 7 selon la direction de la flèche F à travers une ouverture d'entrée du combustible gazeux 12. Le dit gaz remplit la chambre d'alimentation 7. La rencontre de l'air comburant, porteur de l'oxygène nécessaire à la combustion, et le combustible gazeux a lieu précisément entre les très petits méandres de la surface de combustion 9 du corps poreux 1. Le combustible gazeux, au contact de l'oxygène, s'enflamme et brûle en développant toute sa puissance calorifique, et ce procéssus se répète pour former une infinité de microfoyers sur toute la surface de combustion 9, pratiquement en regard de chaque trou de passage ou de pore 10 du corps poreux 1. Il se forme donc un grand nombre de foyers qui brûlent avec une flamme tellement réduite qu'elle est pratiquement invisible.

Le gaz obtenu de la combustion du combustible gazeux - par exemple le monoxyde de carbone - suite à son oxydation -par exemple par transformation en bioxyde de carbone avec production de chaleur selon la formule bien connue de la combustion - quitte alors la chambre de combustion, à travers l'embout de sortie 11, lequel gaz à haute température, sera dirigé de préférence dans un échangeur de chaleur (non représenté) pour du chauffage, La flèche G montre dans cette variante et dans toutes celles qui suivent, la direction de déplacement des gaz de combustion chauds qui quittent la chambre de combustion.

Des mesures pratiques ont démontré que le type de combustion réalisé, connu en soi, sur une surface de combustion sans flamme visible, permet d'obtenir un rendement thermique élevé et une émission réduite aussi bien du monoxyde de carbone que des oxydes d'azote. A ces avantages, connus et inhérents au mode de combustion ainsi mes en oeuvre dans l'invention, s'ajoute en outre celui lié au fait que le corps poreux 1 ne joue pas le rôle, comme c'est le cas dans la technique reconnue, de filtre du gaz comburant, et ne peut donc pas être obturé par les particules de cendres toujours présentes dans les combustibles gazeux provenant par exemple de la combustion du bois.

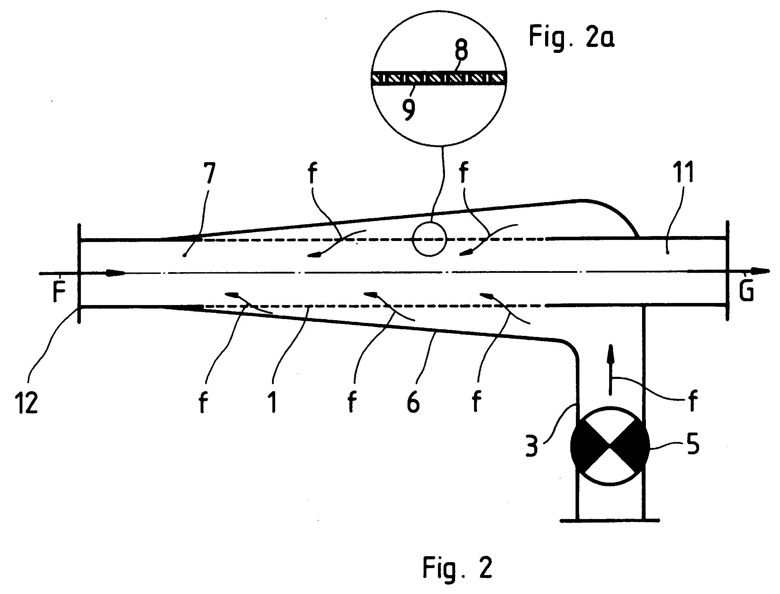

La Fig. 2 montre une variante de la chambre de combustion dans une représentation graphique égale à celle de la Fig. 1. Pour faciliter la lecture, les éléments de la variante de la Fig. 2, qui remplissent les mêmes fonctions que les éléments correspondants de la variante de la Fig. 1 portent les mêmes numéros de référence. La différence essentielle entre la variante de la Fig. 2 et celle de la Fig. 1 réside dans le fait que dans le cas de la Fig. 2 le corps poreux 1 est un corps de forme essentiellement cylindrique, comme celui de la Fig. 1, qui par contre est parcouru intérieurement par le combustible gazeux, lequel entre à l'une de ses extrémités par une ouverture d'entrée du combustible gazeux 12 et sort par l'autre extrémité, le dit gaz de combustion chaud, à travers un embout 11. Le corps poreux 1 est ici entouré d'une enveloppe externe 6 essentiellement coaxiale avec le corps poreux 1 et de forme cylindrique ou, comme indiqué graphiquement sur la Figure, légèrement rétréci et constitué d'un matériau non perméable aux gaz. L'enveloppe extérieure 6 est reliée d'une part à un embout de raccordement 3 pour l'alimentation de l'air comburant et d'autre part est relié directement à l'ouverture d'entrée 12 du combustible gazuex, de sorte que l'air comburant, alimenté en surpression, est contraint de traverser le corps poreux 1 et à entrer en contact, sur la surface de sortie 9 du corps poreux 1, surface qui se trouve dans ce cas à l'intérieur du corps poreux 1 (comme le montre le détail agrandi de la Fig. 2a) avec le combustible gazeux. Dans ce cas la chambre d'alimentation du combustible gazeux 7 est constituée par le volume intérieur cylindrique du corps poreux 1. Dans cette variante la surface de combustion 9 se trouve donc à l'intérieur du corps poreux 1, ce qui facilite l'accès à la surface d'entrée 8 du corps poreux 1, surface qui forme une espèce de filtre pour l'air comburant. Si, comme il a déjà été dit, l'air comburant ne contient pas de poussières, il peut être utile de temps en temps de nettoyer la surface d'entrée 8 du corps poreux 1, ce qui est naturellement plus facile dans le cas de la variante de la Fig. 2 que dans celui de la variante de la Fig.1. C'est là l'avantage de cette solution par rapport à l'autre. La fait que l'enveloppe 6 soit rétrécie dans le sens d'un rétressissement de la droite vers la gauche a comme but d'adapter les sections de passage de l'air d'alimentation à la quantité d'air passant, de façon à rendre approximativement constante la vitesse d'écoulement de l'air. La même mesure, c'est à dire l'adaptation de la section de passage à la quantité d'air et/ou de gaz passant (5), sera introduite également dans les variantes de réalisations plus perfectionnées qui seront montrées par la suite: toutefois ceci ne revêt pas un aspect inventif important, puisque cela rentre dans le cadre du dimensionnement de la chambre de combustion et est donc à la portée de chaque homme de métier.

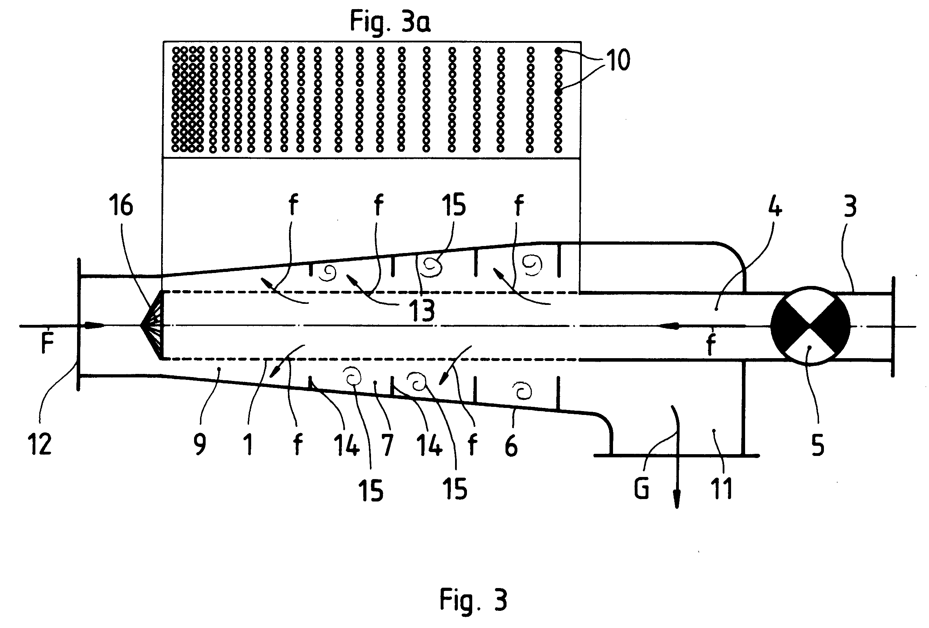

La variante montrée dans la Fig. 3 se distingue de celle de la Fig.1, avec laquelle elle concorde cependant en ce qui concerne la disposition générale des éléments qui portent les mêmes numéros de référence, par une caractéristique supplémentaire. En effet, dans cette variante, reprenant la caractéristique de la revendication 2 du procédé qui prévoit de mélanger intimement l'air comburant et le combustible gazeux dans le voisinage immédiat de la surface de combustion 9 du corps poreux 1, l'enveloppe extérieure 6 présente, sur sa surface interne 13, des parois transversales 14 pénétrant dans la chambre d'alimentation du combustible gazeux 7. Les parois 14 ont une forme essentiellement annulaire et dévient partiellement le flux du combustible gazeux dans la chambre 7, de manière à créer des turbulences de gaz entre la surface de combustion 9 et la surface intérieure 13 de l'enveloppe 6.

Grâce à la formation des turbulences mentionnées dans la voisinage de la surface de combustion 9, turbulences indiquées symboliquement dans la Fig. 3 par des "frisons" 15, des conditions idéales de combustion sont réalisées, étant donné qu'un mélange intime et correct de l'air comburant et du combustible gazeux est à la base même d'une combustion complète et régulière. On veut empêcher en particulier la formation de courants laminaires qui sont à éviter si l'on veut garantir une bonne combustion.

Dans la variante de la Fig. 3 on peut voir que, là également, l'enveloppe 6 a un diamètre décroissant de la droite vers la gauche, ceci pour tenir compte du volume croissant du mélange de gaz de combustion d'une manière analogue à ce qui est montré dans la Fig. 2, et que la partie frontale du corps poreux 1 est constituée dans ce cas d'une calotte 16 imperméable aux gaz. Ceci pour montrer qu'il n'est en effet pas nécessaire, en relation avec l'invention, que tout le corps poreux 1 soit constitué d'un matériau perméable aux gaz: il est suffisant qu'il le soit sur une zone déterminée, là où la dite zone forme la surface de sortie 9 de l'air comburant, autrement dit la surface de combustion proprement dite.

La Fig. 3a montre un détail de la superficie du corps poreux 1 dans une forme purement schématique, dans laquelle on voit que la densité des pores 10, indiqués par des petits cercles, décroit d'une extrémité à l'autre, dans le sens axial, du corps poreux.

C'est là un des divers moyens possibles pour influencer la distribution de l'air comburant sur la superficie de combustion: il est évident que, à conditions identiques, le débit d'air sortant du corps poreux sera plus important là où précisément la densité des pores 10 est plus forte. La représentation graphique montrée est naturellement purement symbolique et n'a pas d'autre but que de montrer la variation de là densité des pores 10: les pores 10 sont naturellement de très petit diamètre et sont pratiquement invisibles à l'oeil nu. En outre la surface de combustion 9 du corps poreux 1 peut avoir une structure plus ou moins rugueuse, selon le matériau qui la constitue et le mode de fabrication utilisé. Ceci ne constitue cependant pas une caractéristique importante de la présente invention, selon laquelle il est suffisant de prévoir que le passage de l'air comburant à travers le corps poreux 1 peut être modifié de manière à l'adapter aux exigences. La solution préférée de la Fig. 3a, correspondant à la revendication 11, n'est pas la seule envisagée, bien qu'elle soit la plus facile à réaliser. Une autre solution, plus compliquée et donc moins préférée, consisterait par exemple à vaire varier le diamètre des pores 10.

La Fis. 4 montre une autre variante préférée de réalisation de la chambre de combustion, également en section longitudinale et schématique. Cette variante se différencie de celle des figures précédentes de 1 à 3 par le fait qu'elle présente deux corps poreux au lieu d'un seul. Pour éviter toute confusion, tous les composants de la variante 4, également ceux qui ont les mêmes fonctions que ceux mentionnés dans les Figures de 1 à 3, portent des nouveaux numéros de référence.

La variante de la Fiure 4, qui se fixe comme but d'augmenter ultérieurement l'efficacité de la chambre de combustion en contraignant le combustible gazeux à entrer en contact avec une surface de combustion, satisfait aux caractéristiques du procédé faisant l'objet de l'invention selon la revendication 3, selon lesquelles la rencontre du combustible gazeux et l'air comburant a lieu sur les surfaces de combustion des deux corps poreux 17,18 disposés en regard l'un de l'autre de manière à former un canal de passage 19 traversé par le combustible gazeux, tandis que l'air comburant est conduit au canal de passage 19 des deux côtés après avoir traversé, les dits courants d'air distincts f1 et f2, tous les deux corps poreux 17 et 18.

La chambre de combustion de la Fig. 4 est constituée d'une enveloppe extérieure 20 de forme essentiellement cylindrique présentant une ouverture d'entrée du combustible gazeux 21, à gauche de la Figure, un embout de sortie 22 et deux embouts d'entrée 23 et 24 de l'air comburant, fermés chacun par un clapet de réglage 25, resp. 26. L'embout 24 conduit l'air directement à l'intérieur du récipient constitué par l'enveloppe cylindrique 20 fermée frontalement par la paroi de fond 27. Il est à relever que, à partir de l'ouverture d'entrée 21, la paroi cylindrique de l'enveloppe 20 prend la forme d'un tronc de cône, de façon à épouser le petit diamètre de l'ouverture d'entrée 21. Il s'agit cependant d'un détail purement constructif, sans aucune importance sur les effets de l'invention
L'embout d'entrée 23 traverse par contre la paroi de fond 27 et est disposée, sans que cela soit nécessaire, coaxialement avec l'enveloppe extérieure 20. A l'intérieur de l'enveloppe extérieure 20 l'embout d'entrée 23 est relié à un corps poreux 17 au moyen d'une paroi perpendiculaire par rapport à l'axe de l'enveloppe extérieure 20. Le dit corps poreux est disposé essentiellement coaxialement avec l'enveloppe extérieure 20 et occupe une part importante de son volume intérieur. Le corps poreux 17 correspond essentiellement, en ce qui concerne la forme et la fonction, au corps poreux 1 de la forme d'exécution de la Fig. 1. Egalement le corps poreux 17 est essentiellement cylindrique et est fermé frontalement, du côté faisant face à l'ouverture d'entrée 21, par une calotte 29 de forme conique de préférence de façon à mieux accompagner le combustible gazeux vers sa destination, comme cela sera décrit ci après.

Il faut garder à l'esprit que le fait que le corps poreux intérieur 17 ait un diamètre supérieur à l'embout d'entrée 23 de l'air comburant et que par conséquent il faille prévoir une paroi 28, n'est pas en fait important quant aux effets de l'invention: il s'agit d'une question de dimensionement, afin d'obtenir des vitesses de passage des gaz et de l'air de même que des surfaces de combustion correspondant aux nécessités pratiques.

La zone annulaire comprise entre la surface cylindrique extérieure du corps poreux intérieur 17 - qui est la première surface de combustion - et la surface intérieure de l'enveloppe extérieure 20 est à présent divisée en deux chambres par la présence d'un deuxième corps poreux 18, appelé aussi "corps poreux extérieur" ou de plus grand diamètre, de forme aussi essentiellement cylindrique et aussi disposé coaxialement avec le corps poreux 17.

Les propriétés des deux corps poreux 17 et 18, en ce qui concerne le passage de l'air, sont en tous points égaux à celles du corps poreux 1 décrit précédemment à propos des solutions des Figures de 1 à 3. Le corps poreux extérieur 18 divise donc la zone annulaire sus mentionnée en deux chambres: une chambre annulaire située entre l'enveloppe extérieure 20 et la "surface d'entrée" ou surface extérieure du corps poreux 18, et la dite chambre d'alimentation extérieure 30 de l'air comburant, et une chambre d'alimentation du combustible gazeux ayant aussi la forme d'un canal annulaire 19 et délimitée des deux côtés par les surfaces de sortie, ou superficies de combustion, des corps poreux 17 et 18, superficies pas autrement caractérisées et dont le fonctionnement est tout à fait identique à celui du corps poreux 1 et de la superficie de combustion 9 des variantes de réalisation des Figures de 1 à 3. La chambre intérieure du corps poreux cylindrique 17 se remplit d'air comburant provenant de l'embout 23 et constitue la chambre d'alimentation intérieure 32 de l'air comburant. En relation au fait que, dans cette variante, on a deux corps poreux 17 et 18 avec deux surfaces de combustion ou surfaces de sortie (pas indiquées spécialement) et deux embouts d'entrée 23 et 24 de l'air comburant, on aura par voie de conséquence deux courants d'air comburant, indiqués par les flèches f1 et f2, qui traversent les deux corps poreux 17 et 18 depuis les surfaces respectives d'entrée vers les surfaces respectives de sortie (toutes les deux non numérotées).

Le fonctionnement de la chambre de combustion représentée dans la Fig. 4 est le suivant:
L'air comburant, pénétrant dans les deux chambres d'alimentation de l'air comburant 32, 30 par les embouts d'alimentation respectifs 23, 24 et divisé en deux courants d'air f1, f2 réglés quantitativement au moyen des clapets de réglage 25, 26, est contraint de traverser, étant en surpression, les corps poreux 17, 18 et plus précisément le corps poreux 17 " de l'intérieur vers l'extérieur" et le corps 18 " de l'extérieur vers l'intérieur". Les deux courants d'air f1 et f2 sont donc tous deux dirigés radialement vers la chambre d'alimentation du combustible gazeux 19. Ils entrent donc en contact avec le combustible gazeux sur les surfaces de combustion (sans indication de numéros) des corps poreux 17 et 18, donc là où se produit la combustion du gaz, d'une façon analogue à ce qui se produisait pour la surface de combustion 9 du corps poreux 1 des variantes des Figures de 1 à 3.

Le combustible gazeux passe donc à travers une chambre d'alimentation du combustible gazeux 19, appelée aussi canal annulaire, refermée des deux côtés par une surface de combustion, de manière à ce que le gaz doit entrer en contact avec la dite surface et brûle entièrement.

Les gaz de la combustion sortent ensuite de la chambre annulaire 19 à travers l'embout de sortie 22, en tant que gaz à haute température et suivant la direction de la flèche G. Ces gaz sont aussi destinés à alimenter de préférence un échangeur de chaleur, avant d'être refroidis et rejetés dans l'atmosphère.
L'expérience a montré ici également que, grâce au fait que la combustion a lieu pratiquement en l'absence de flamme, la production d'oxydes d'azote comme celle de monoxyde de carbone sont fortement réduites.

Il est clair que le fait de contraindre le combustible gazeux à passer à travers un canal annulaire 19 délimité des deux côtés par une surface de combustion sur laquelle est amené l'air comburant augmente considérablement la qualité de la combustion comparée à celle de la solution des Figures de 1 à 3. La quantité d'air comburant convoyé dans les deux chambres d'alimentation de l'air comburant 30 et 32 peut être dosée convenablement au moyen des deux clapets de réglage 26, resp. 25, de manière à obtenir des conditions de combustion optimales équilibrées sur les deux surfaces de combustion des deux corps poreux 17 et 18.

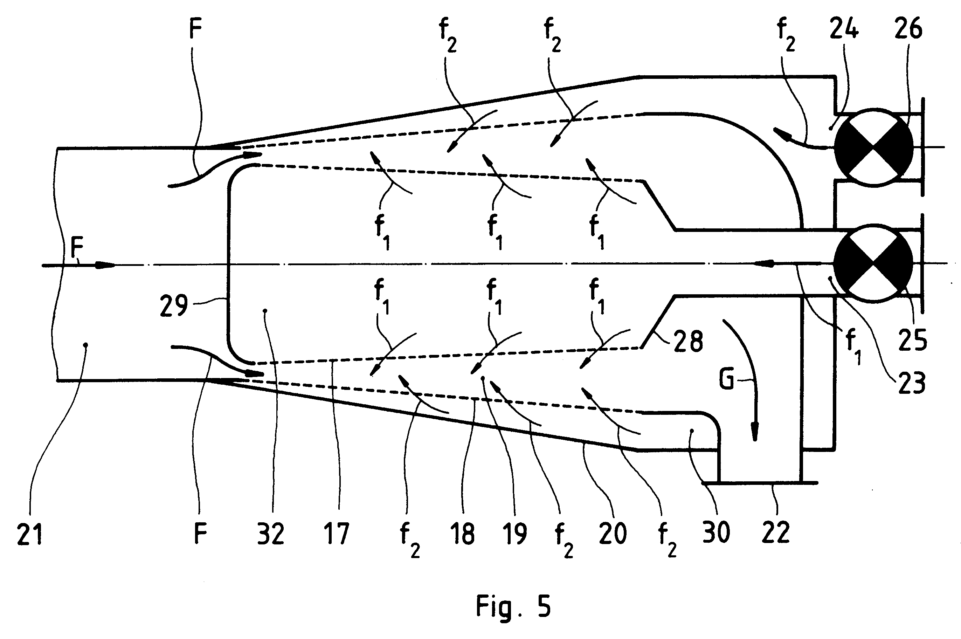

La variante de la Fig. 5 diffère de celle de la Fig. 4 seulement par le fait que, dans la Fig. 5, les sections de passage des gaz intervenant dans la procéssus de combustion - combustible gazeux et air comburant f1 et f2 - soient déterminées de manière à avoir toujours une vitesse d'écoulement idéale. Les mêmes éléments de la variante de la Fig. 5, correspondant dans leurs fonctions à ceux de la Fig. 4, sont donc désignés par les mêmes numéros de référence. Dans la variante de la Fig. 5 aussi bien le corps poreux de petit diamètre 17, désigné ici d'une façon mieux appropriée corps poreux intérieur, que celui de grand diamètre 18, désigné ici de façon plus appropriée corps poreux extérieur, sont légèrement rétressis de manière à former deux corps de forme de cône tronqué. Le grand diamètre du corps poreux de petit diamètre 17 est disposé en regard du petit diamètre du corps poreux de grand diamètre 18, de façon à ce que le canal annulaire 19 qui constitue la chambre d'alimentation du combustible prenne une section croissante dans le sens du passage du combustible gazeux, où par la suite, l'accroissement de la section de passage de la chambre d'alimentation du combustible gazeux 19 est choisi de manière telle que la vitesse d'écoulement du gaz en déplacement dans la direction de l'axe soit approximativement constante. Selon cette forme d'exécution préférée de l'invention il s'agit donc de dimensioner la chambre de combustion, et ses éléments, de manière à ce que les courants de gaz en phase de combustion réalisent des conditions aérodynamiques constantes dans le canal annulaire à l'intérieur duquel se produit la combustion.

Les avantages d'une telle mesure, dont la réalisation pratique est à la portée de chaque homme de métier, sont évidents: des conditions aérodynamiques constantes le long de tout le "canal de combustion" 19 garantissent une combustion optimale le long de tout le parcours axial du canal 19, de l'ouverture d'entrée 21 du combustible gazeux à l'embout de sortie des gaz de la combustion 22.

Evidents également les avantages offerts par la possibilité de régler la quantité d'air d'alimentation conduit, à travers les embouts d'entrée 23, 24, à chaque chambre d'alimentation de l'air comburant 30,32, en particulier si l'on considère que les surfaces de combustion des deux corps poreux 17 et 18 n'ont pas, par suite de la différence de diamètre, la même surface. Grâce aux deux clapets 25, 26 il est donc possible d'adapter la quantité d'air comburant apportée à la surface de combustion à la grandeur des dites surfaces, ce qui constitue un moyen d'intervention sur la combustion dans le sens d'en optimaliser le rendement.

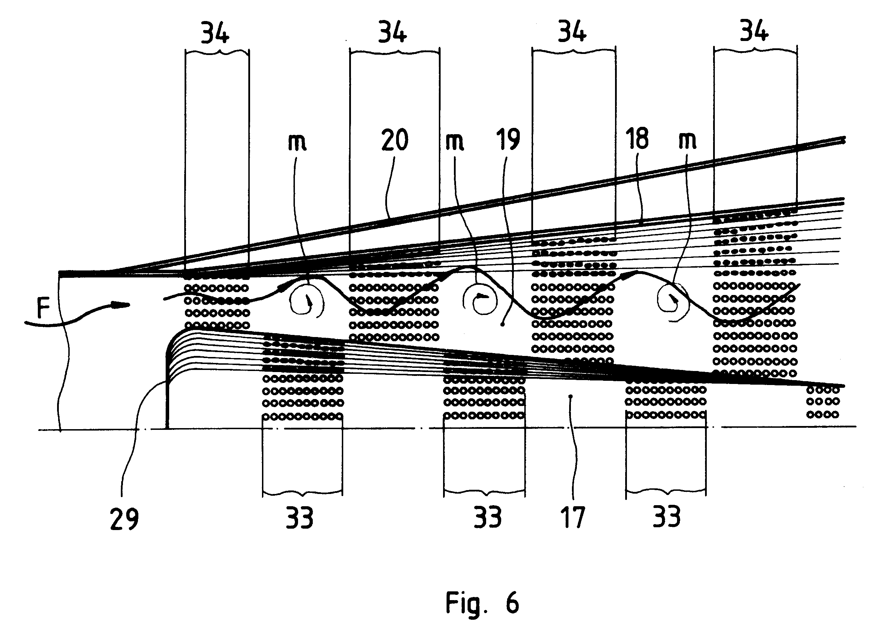

La variante préférée représentée dans la Fig.6 montre une autre possibilité d'intervention pour modifier les conditions de la combustion, en les rendant plus efficientes, dans une chambre de combustion à deux corps poreux coaxiaux comme celle des Figures 4 et 5.
Le but de la disposition inventive correspondant à la solution de la Fig. 6 est identique à celui montré dans la Fig. 3 et faisant l'objet des revendications 2 et 7, c'est à dire de provoquer la formation de turbulences du combustible gazeux et des gaz de la combustion dans le voisinage des surfaces de combustion. De telles turbulences favorisent en effet le mélange intime de l'air comburant, traversant les corps poreux, avec le combustible gazeux.

La Figure 6 montre donc un détail agrandi d'une partie du canal 19 lequel constitue la chambre d'alimentation du combustible gazeux, renfermé entre la paroi extérieure du corps poreux intérieur 17 et la paroi intérieure du corps poreux extérieur 18. Les deux corps poreux 17 et 18 sont en forme de troncs de cônes, comme indiqué aussi dans la Figure 5, ce qui fait que le canal 3, représenté en coupe longitudinale comme sur la Fig. 6, est conique de la gauche vers la droite.
La superficie des deux corps poreux 17 et 18 présente des trous de passage, respectivement des pores très fins, à travers lesquels, comme expliqué plus avant pour les autres corps poreux décrits, l'air comburant passe dans la chambre d'alimentation du carburant gazeux 19. Dans la Fig. 6, ces pores sont représentés comme de gros trous: en réalité ils sont beaucoup plus fins et pratiquement invisibles à l'oeil nu, bien que perméables au passage de l'air.

Selon cette forme d'invention les pores de passage de l'air comburant sont donc disposés le long de bandes annulaires 33 et 34, là où les bandes annulaires 33 du corps poreux de petit diamètre 17, soit le corps poreux intérieur, sont disposées en regard de zones annulaires du corps poreux de grand diamètre, soit le corps poreux extérieur, sans trous, tandis que les bandes annulaires 34 avec pores, du corps poreux de grand diamètre 18, soit du corps poreux extérieur, sont disposées en regard de bandes annulaires du corps poreux de petit diamètre 17, soit du corps poreux intérieur, aussi sans trous.

Grâce à cette disposition des pores sur la superficie des corps poreux 17 et 18 on obtient, dans la chambre d'alimentation du combustible 19, une superposition alternée de déplacements d'air axiaux et radiaux, de sorte que le courant résultant a ainsi un mouvement ondulatoire dans son ensemble, avec formation de turbulences comme le montre symboliquement la Fig. 6 avec les flèches en spirale m. Le choix des largeurs et des positions de chaque bande de pores, de la densité des pores etc.., de manière à obtenir un effet d'intensité maximale, peut être fait, par des essais appropriés, par n'importe quel professionel.
Dans la Fig.6, par souci de simplicité, les flèches f1 et f2 indiquant les courants d'air comburant traversant les corps poreux 17 et 18 n'ont pas été représentées.

Les formes d'exécution des chambres de combustion selon l'invention, toutes basées sur une forme essentiellement cylindrique ou à cône tronqué du ou des corps poreux, sont seulement quelques unes, bien que préférées, des formes de chambres de combustion imaginables avec lesquelles le concept de l'invention pourrait être réalisé. En effet il serait pensable de réaliser aussi des chambres de combustion avec des corps poreux plans ou sphériques ou encore composés d'une combinaison d'autres formes. Ces dernières également, pourvu que l'air comburant entre en contact avec le combustible gazeux après avoir traversé la paroi du corps poreux perméable, rentreraient dans le cadre de la présente invention.

L'avantage essentiel de la présente invention et celui de permettre la combustion de combustible gazeux contenant des cendres et d'autres particules solides en suspension tout en garantissant l'obtention de valeur extrèmement basses d'émissions nocives dans les fumées, en particulier en ce qui concerne les oxydes d'azote et le monoxyde de carbone.

## Revendications

1. Procédé de combustion pour brûler des gaz sur une surface de combustion d'un corps poreux perméable aux gaz, dans lequel la combustion se fait entre les pores de la surface du corps poreux, grâce à la rencontre du combustible gazeux avec l'air comburant porteur de l'oxygène nécessaire au procéssus de combustion
caractérisé par le fait que
la rencontre du combustible gazeux et de l'air comburant se produit dur la surface de combustion 9 du corps poreux (1;17;18) après que l'air comburant ait traversé le corps poreux (1;17;18) tandis que le combustible gazeux est amené directement à la surface de sortie (9) du corps poreux (1;17;18).

2. Procédé selon la revendication 1,
caractérisé par le fait que
l'air comburant et le combustible gazeux soient mélangés intimement dans la voisinage immédiat de la surface de sortie (9) du corps poreux (1;17;18) par l'adoption de mesures adaptées à créer des turbulences locales d'air et de gaz.

3. Procédé selon la revendication 1,
caractérisé par le fait que
la rencontre du combustible gazeux et de l'air comburant se produit sur les superficies de deux corps poreux (17;18) disposés l'un en regard de l'autre pour former une chambre d'alimentation du combustible gazeux (19) ayant la forme d'un canal de passage traversé par le combustible gazeux, tandis que l'air comburant est porté au canal de passage (19) des deux côtés après avoir traversé, en tant que deux courants d'air distincts (f1;f2), tous les deux corps pureux (17;18).

4. Chambre de combustion pour réaliser le procédé selon la revendication 1, avec une surface de combustion constituée d'un corps poreux (1;17;18), perméable aux gaz, non seulement avec une chambre d'alimentation de l'air comburant (4;30;32), reliée a un embout (3;23;24) d'entrée de l'air et entrant en contact avec la surface d'entrée (8) du corps poreux (1;17;18), mais avec une chambre d'alimentation du combustible gazeux séparée de la chambre d'alimentation en air comburant du corps poreux,
caractérisé par le fait que
la surface d'entrée (8) du corps poreux (1;17;18) est en contact avec la chambre d'alimentation (4;30;32) de l'air comburant en surpression dans le sens d'en constituer la sortie de la dite chambre (4;30;32), et par le fait que l'air comburant est contraint de traverser le corps poreux (1;17;18) et d'entrer en contact, après le passage, avec le combustible gazeux qui se trouve en contact avec la surface de sortie (9) du corps gazeux (1;17;18) de manière à provoquer la combustion.

5. Chambre de combustion selon la revendication 4,
caractérisée par le fait que
le corps poreux (1) est un corps de forme essentiellement cylindrique alimenté de l'intérieur à l'une de ses extrémités en air comburant en surpression au moyen d'un embout de raccord (3), fermé à l'autre extrémité par une calotte (2) perméable ou non à l'air, enfermé dans une enveloppe (6), essentiellement coaxiale au corps poreux (1), de forme également essentiellement cylindrique ou légèrement rétréssie et constitué d'un matériau imperméable aux gaz, et par le fait que l'enveloppe (6) présente une ouverture (12) disposée a l'une de ses deux extrémités pour l'entrée du combustible gazeux (7), de manière à ce que la chambre d'alimentation du combustible gazeux (7) soit constituée entre la paroi externe (9) cylindrique du corps poreux (1) et la paroi intérieure de l'enveloppe (6) et soit donc de forme essentiellement annulaire.

6. Chambre de combustion selon la revendication 4,
caractérisée par le fait que
le corps poreux (1) est un corps de forme essentiellement cylindrique parcouru intérieurement par le combustible gazeux entrant à l'une des extrémités du dit corps poreux (1) par une ouverture d'entrée du combustible gazeux (12) et sortant par l'autre extrémité en tant que gaz de combustion à haute température, à travers un embout de sortie (11), et en outre que le corps poreux (1) est entouré d'une enveloppe (6) essentiellement coaxiale au corps poreux (1) de forme cylindrique ou lègèrement rétréssie et constituée d'un matériau imperméable aux gaz et ou en outre l'enveloppe extérieure (6) est reliée d'un côté à l'embout de raccordement (3) pour l'alimentation de l'air comburant tandis que de l'autre côté la dite enveloppe (6) est reliée directement à l'ouverture d'entrée (12) du combustible gazeux, de sorte que l'air comburant, en surpression, est contraint de traverser le corps poreux (1) et d'entrer en contact, sur la surface de sortie (9) du corps poreux (1), avec le combustible gazeux, de sorte que la chambre d'alimentation du combustible gazeux (7) est constituée par le volume interne cylindrique du corps poreux (1). (Fig. 2)

7. Chambre de combustion selon la revendication 5,
caractérisée par le fait que
l'enveloppe (6) présente, sur sa superficie intérieure (13), des parois transversales (14) pénétrant dans la chambre d'alimentation du combustible gazeux (7) de forme essentiellement annulaire et freinent partiellement le passage axial du combustible gazeux afin de créer des turbulences de gaz entre la surface de combustion (9) du corps poreux (1) et la surface intérieure (13) de l'enveloppe (6). (Fig. 3)

8. Chambre de combustion pour réaliser le procédé selon les revendications 1 et 3, avec une surface de combustion constituée de deux corps poreux (17;18) perméables aux gaz et avec deux chambres d'alimentation (30;31) de l'air comburant reliées chacune à un embout d'entrée (23;24) et chacune entrant en contact avec une seule des surfaces d'un des corps poreux (17;18) et avec une chambre d'alimentation (19) du combustible gazeux séparée des chambres d'alimentation en air comburant (30;32) par le corps poreux respectif (17;18),
caractérisé par le fait que
les deux corps poreux (17;18) sont disposés coaxialement, de manière à renfermer, dans l'espace formé entre la paroi extérieure de celui de petit diamètre (17) et la paroi intérieure de celui de grand diamètre (18), la chambre d'alimentation du combustible gazeux (19), ayant la forme d'un canal annulaire, où ensuite
la surface d'entrée du corps poreux de petit diamètre (17) est en contact avec la chambre d'alimentation respective de l'air comburant (32) dans le sens d'en constituer la sortie, de sorte que l'air comburant est contraint de traverser le corps poreux (17) de l'intérieur vers l'extérieur et d'entrer en contact avec le combustible gazeux qui traverse le canal annulaire (19) et où ensuite
la surface du corps poreux de grand diamètre (18) est en contact avec la chambre d'alimentation respective de l'air comburant (30) dans le sens d'en constituer la sortie, de sorte que l'air comburant est contraint de traverser le corps poreux (18) de l'extérieur vers l'intérieur et d'entrer en contact avec le combustible gazeux qui traverse le canal annulaire (19). Fig. 4)

9. Chambre de combustion selon la revendication 8,
caractérisée par le fait que
aussi bien le corps poreux de petit diamètre (17) que celui de grand diamètre (18) sont légèrement rétréssis dans le but de constituer deux corps en forme de tronc de cône et de manière a ce que le grand diamètre du corps poreux de petit diamètre (17) corresponde au petit diamètre du corps de grand diamètre (18), de sorte que le canal annulaire (19) qui constitue la chambre d'alimentation du combustible ait une section de surface croissante dans le sens du passage du combustible gazeux, où ensuite l'accroissement de la section de passage de la chambre d'alimentation du combustible gazeux (19) est choisi de façon à ce que la vitesse du gaz qui s'écoule en elle en direction axiale soit approximativement constante.

10. Chambre de combustion selon l'une quelconque des revendications de 4 à 9,
caractérisée par le fait que
chaque chambre d'alimentation de l'air comburant (4;30;32) est équipée d'un clapet de réglage de l'air comburant (5;25;26) en surpression dans le but de régler la quantité d'air comburant alimentant les chambres de combustion respectives (4;30;32).

11. Chambre de combustion selon la revendication 4,
caractérisée par la fait que
la surface du corps poreux (1;17;18) présente une densité de pores décroissante d'uns extrémité à l'autre, dans le sens axial, du corps poreux (1;17;18).

12. Chambre de combustion selon les revendications 8 et 9
caractérisée par le fait que
le corps poreux (1;17;18) est constitué d'un matériau à haute résistance thermique par exemple des fibres de carbone ou des fibres de céramique.

13. Chambre de combustion selon les revendications 8 et 9
caractérisée par le fait que
la surface des deux corps poreux (17;18) présente des pores de passage de l'air comburant disposés le long de bandes annulaires (33;34) et que les dites bandes annulaires (33) du corps poreux de petit diamètre (17) sont disposées en regard de zones annulaires du corps poreux de grand diamètre (18) exemptes de pores, tandis que les bandes annulaires (34) de pores du corps poreux de grand diamètre (18) sont disposées en regard de zones du corps poreux de petit diamètre (17) exemptes de pores. (Fig. 6)
